# EUROPÄISCHE PATENTANMELDUNG

(11) **EP 2 025 819 A1**
(43) Veröffentlichungstag der Anmeldung: **18.02.2009**
(21) Anmeldenummer: 08102288.1
(22) Anmeldetag: 05.03.2008
(51) Int. Cl.: E02D 33/00, G01N 15/00

(54) **Vorrichtung zur Erfassung von Bewegungen von setzungsempfindlichen Bauteilen**

(30) Priorität: 23.05.2007 DE 102007024302
(71) Anmelder: Braun, Matthias, 35578 Wetzlar (DE); Lumma, Detlef, 35794 Mengerkirchen (DE); Voltmann, Eckhard, 38350 Helmstedt (DE)
(72) Erfinder: Braun, Matthias, 35578 Wetzlar (DE); Voltmann, Eckhard, 38350 Helmstedt (DE); Lumma, Detlef, 35794 Mengerskirchen (DE)
(74) Vertreter: Knefel, Cordula

(57) **Zusammenfassung**

Vorrichtung zur Erfassung von Bewegungen von setzungsempfindlichen Bauteilen mit einem Spanndraht oder einem Spannseil, der oder das an einem setzungsunempfindlichen Bauteil angeordnet ist, bei der an dem zu überwachenden Bauteil ein Abnehmer angeordnet ist, und bei der der Abnehmer als ein vertikale und/oder horizontale Bewegungen erfassender Abnehmer ausgebildet ist.

## Beschreibung

Die Erfindung betrifft eine Vorrichtung zur Erfassung von Bewegungen von setzungsempfindlichen Bauteilen.

Gemäß dem Stand der Technik (JP 2000171203 A) wird mit einem Laser lediglich ein bewegliches Objekt überwacht. Der Laser ist auf dem beweglichen Objekt installiert und auf eine starre Zieltafel ausgerichtet. Die Zieltafel (Reflektor) ist an zwei Spanndrähten befestigt, die wiederum an zwei Festpunkten befestigt sind. Eine Alarmfunktion wird ausgelöst, wenn der Laserstrahl aufgrund von Bewegungen des Lasers auf dem beweglichen Bauteil aus der Zieltafel wandert.

Die Spanndrähte sind nur eine Hilfskonstruktion zur Befestigung der Reflektoren.

Diese zum Stand der Technik gehörende Vorrichtung weist den Nachteil auf, dass sie relativ ungenau arbeitet, da es theoretisch und praktisch möglich ist, dass der Laserstrahl nicht aus der Zieltafel wandert, obwohl sich das bewegliche Objekt absenkt und gleichzeitig verdreht, so dass die Auslenkung durch die Setzung und durch die Verdrehung aufgehoben wird und somit keine Alarmmeldung abgegeben wird. Darüber hinaus ist die Vorrichtung empfindlich gegen Umwelteinflüsse wie Verschmutzungen. Ist beispielsweise die Linse der den Laserstrahl erzeugenden Vorrichtung verschmutzt, tritt eine Fehlfunktion auf.

Das der Erfindung zugrunde liegende technische Problem besteht darin, eine Vorrichtung zur Erfassung von Bewegungen von setzungsempfindlichen Bauteilen anzugeben, die sehr genau arbeitet und darüber hinaus gegenüber Umwelteinflüssen unempfindlich ist.

Unter setzungsempfindlichen Bauteilen werden Gebäude, insbesondere Hallen, weit gespannte Tragsysteme, Dachtragwerke und Stadiondächer verstanden. Auch Baubehelfe, die zum Beispiel beim Baugrubenverbau, Rüstungen und so weiter vorgesehen sind, fallen hierunter.

Die erfindungsgemäße Vorrichtung zur Erfassung von Bewegungen von setzungsempfindlichen Bauteilen zeichnet sich dadurch aus, dass ein Spanndraht oder Spannseil vorgesehen ist, der oder das fix angeordnet ist, das heißt an einem setzungsunempfindlichen Bauteil. An dem zu überwachenden Bauteil ist ein Abnehmer angeordnet, der vertikale und/oder horizontale Bewegungen aufnehmen kann. Vorteilhaft sind in dem Abnehmer ein oder zwei Schleifer angeordnet, über die eine Bewegung des Spanndrahtes erfasst wird.

Der erfindungsgemäß vorgesehene potentiometrische Wegaufnehmer arbeitet im Prinzip wie ein linearer veränderlicher Widerstand, das heißt jeweils ein Schleifer wird über je eine Widerstandsbahn geschoben. Wird eine Spannung am Wegaufnehmer angeschlossen, so ist die Ausgangsspannung am Schleifer proportional zur Position des Schleifers auf der Widerstandsbahn. Die Widerstandsbahn besteht vorteilhaft aus hochwertigem Leitplastik. Hierdurch wird eine sehr hohe Auflösung erzielt und es können bei großen Vorschubgeschwindigkeiten, beispielsweise bis zu 10 Metern pro Sekunde, Wege von beispielsweise 10 Millimetern bis 2.000 Millimetern erfasst und analog weiterverarbeitet werden.

Die erfindungsgemäße Vorrichtung zeichnet sich dadurch aus, dass alle horizontalen und vertikalen Bewegungen gemessen werden können. Die Messwertgenauigkeit liegt im Zehntelmillimeterbereich.

Vorteilhaft können gleichzeitig mit den Verformungsdaten auch Klimadaten wie Temperatur, Windgeschwindigkeit, Luftfeuchtigkeit, Regenmenge, Luftdruck und Bauteiltemperaturen gemessen und abgespeichert werden.

Gemäß einer weiteren vorteilhaften Ausführungsform der Erfindung ist eine Fernübertragung der gespeicherten Daten durch einen Datenträgertausch, Funk- oder Datenkabel an unterschiedlichste Empfänger möglich. Besonders bevorzugt wird ein Datenaustausch über Satellit vorgesehen.

Einsatzmöglichkeiten der erfindungsgemäßen Vorrichtung sind Hallenkonstruktionen, Brückenbauwerke, Stützmauern, Uferanlagen, Staumauern, Baubehelfe, Baugruben und dergleichen.

Bei einer vorhandenen Brückenstatik werden in den maßgeblichen und kritischen Querschnitten die maximal zulässigen Verformungen berechnet, wenn man von einem bestehenden Bauwerk ausgeht. Unter Berücksichtigung eines vorgegebenen Restsicherheitsfaktors werden neue Verformungsgrenzwerte festgelegt. Bei einem vorgesehenen Restsicherheitsfaktor von 2,0 werden die Grenzwerte auf 50 % der berechneten Maximalwerte festgelegt. Bei einem Restsicherheitsfaktor von 1,67 werden die Grenzwerte dementsprechend auf 60 % der Maximalwerte festgelegt. In der erfindungsgemäßen Vorrichtung werden dann die festgelegten Grenzwerte abzüglich der gemessenen Vorverformung als zulässige Restverformung eingestellt.

Gemäß der Erfindung bildet ein Spannseil oder eine Spannlitze in der Messachse einen Referenzstrahl in einem vorgegebenen Abstand zum Tragwerk. In den vorab berechneten Querschnitten des Tragwerks werden Messwertgeber installiert, die kontinuierlich die relativen vertikalen Verschiebungen des Tragwerks zum Spannseil aufnehmen. Die Vorverformung des Tragwerks kann bei der Montage der Messwertgeber berücksichtigt werden oder als Korrekturwert in der Auswertung eingegeben werden. Zusätzlich zur Messwerterfassung wird bei der Überschreitung des festgelegten Grenzwertes ein Alarm ausgelöst. Eine Neueinstellung eines neuen vergrößerten Grenzwertes in der Auswerteeinheit ist jederzeit möglich.

Die erfindungsgemäße Vorrichtung weist den Vorteil auf, dass sie sehr kostengünstig ist und schnell und effektiv an vorgeschädigten Bauwerken eingesetzt werden kann. Durch die kontinuierliche Überwachung (Dauermonitoring) von Verformungen des Tragwerks und deren Aufzeichnung ist eine Beobachtung des Tragverhaltens der Brücke möglich. Änderungen der Verformungen sind erkennbar und können zur Beurteilung der Restlebensdauer des Brückenbauwerks dienen. Die Abgabe eines Alarms bei Erreichen von vorgegebenen Grenzverformungen ist möglich. Eine Kopplung der Messwerte mit Klimadaten kann optional ergänzt werden. Durch das Dauermonitoring ist eine hohe Sicherheit für den Brückenbetreiber gewährleistet und die Anzahl der örtlichen Überprüfungen kann minimiert werden.

Durch die Kombination der erfassten Verformungen des zu überwachenden Bauwerks mit Klimadaten ist es möglich, über einen langen Zeitraum den Einfluss des Klimas auf das Bauwerk zu erfassen und zu speichern. Hierdurch ist es möglich, eine Vielzahl von Messdaten bezüglich der Verformung in Abhängigkeit von den genannten Klimadaten zu erhalten, und die gewonnenen Daten können beim Bau zukünftiger Bauwerke berücksichtigt werden, so dass optimierte Bauwerke geschaffen werden können.

Es besteht auch die Möglichkeit, eine Bestimmung des Volumens der auf dem Bauwerk, beispielsweise einer Brücke, befindlichen Lasten vorzunehmen. Hierüber kann beispielsweise bestimmt werden, welche Verformungen sich bei der Belastung mit einem bestimmten Volumen ergeben. Über die Volumenerfassung ist es möglich, beispielsweise zu bestimmen, ob und wie viele Fahrzeuge sich auf dem setzungsempfindlichen Bauteil, beispielsweise einer Brücke, befinden. Auch diese Werte werden von der erfindungsgemäßen Vorrichtung vorteilhaft mit erfasst und fließen in die Auswertung mit ein.

Die Übertragung der Daten des Wegaufnehmers und/oder der Klimadaten erfolgt vorteilhaft über Satellit. Zur Stromversorgung der Vorrichtung ist vorteilhaft eine Fotovoltaik-Anlage mit Akkumulator vorgesehen, damit die Vorrichtung auch autark arbeiten kann und beispielsweise mehrere Tage mit Strom versorgt ist.

Gemäß einer weiteren vorteilhaften Ausführungsform der Erfindung ist eine Heizvorrichtung, beispielsweise eine Heizröhre vorgesehen, damit die Vorrichtung von Schnee und Eis frei gehalten werden kann.

Eine weitere vorteilhafte Ausführungsform der Erfindung sieht vor, dass durch einen leistungsfähigen Prozessor in den Vorrichtungen sowie im Gerät vorhandene virtuelle Kanäle Grenzwerte einfach auf Messdaten als auch im Gerät berechnete Werte wie zum Beispiel eine Schwingungsüberwachung und Temperaturdifferenzen angewendet werden können.

Im Alarmfall kann damit in Echtzeit reagiert werden. Durch Schaltausgänge kann aktiv ein Signal gesetzt werden, beziehungsweise in den Prozess schützend eingegriffen werden.

Zur Meldung der Alarme kann die Vorrichtung neben einer Ethernetschnittstelle auch über serielle Schnittstellen bedient werden. Die Übermittlung eines Alarms kann damit über SMS (Short Message Service), E-Mail oder Fax oder einen digitalen Ausgang erfolgen.

Vorteilhaft werden mit einer Software auftretende Alarme erfasst, archiviert und gelistet. Jede Meldung und Quittierung der Alarme wird mit Zeit- und Datumsstempel erfasst und archiviert.

Zur Analyse von Störungen und Alarmen werden dann die Messdaten benötigt. Hierzu bietet die erfindungsgemäße Vorrichtung die Möglichkeit, die Messdaten neben der direkten Übertragung zu einem PC oder Server, diese auch im geräteinternen Ring-Speicher zu archivieren.

Damit stehen zur weiteren Auswertung mittels der Software die Messdaten mit Vor- und Nachgeschichte um den Alarmzeitpunkt herum zur Verfügung.

Eine Fernüberwachung durch die erfindungsgemäße Vorrichtung sieht vor, dass Messwerte lokal erfasst und gespeichert werden und mittels einer Fernabfrage, die per Modem, Internet oder GSM erfolgt, abgefragt werden. In abgelegenen Gebieten besteht die Möglichkeit, durch ein Satellitentelefon die Fernabfrage oder Alarmauslösung durchzuführen.

Im Störungsfall können Warnungen per SMS oder E-Mail automatisch an das Servicepersonal abgesetzt werden. Hierdurch ist es möglich, längerfristige Informationen über den Zustand eines Bauwerkes zu gewinnen. Hierzu werden die Messwerte regelmäßig ausgelesen und zum Teil automatisch ausgewertet. Zustandsänderungen werden so rechtzeitig erkannt.

Ein Einsatzgebiet der erfindungsgemäßen Vorrichtung liegt unter anderem in der Überwachung von Gasturbinen oder in der Schwingungsüberwachung von Verdichtern und Kompressoren.

Gemäß einer weiteren vorteilhaften Ausführungsform der Erfindung kann auch eine Messung der absoluten Schwingung, der relativen Wellenschwingungen und eine Messung von Bauwerksschwingungen durchgeführt werden.

Die erfindungsgemäße Vorrichtung lässt sich auch einsetzen, um absolute Verformungen an vorgegebenen Messstellen zu erfassen. Die erfindungsgemäße Vorrichtung kann mit einer Videoüberwachungsanlage zur Verkehrsüberwachung kombiniert werden. Die Überwachung des Verkehrsraumes kann über die Messsensoren ein- und ausgeschaltet werden. Bei Überschreitung eines vorgegebenen Verformungsgrenzwertes an einem Sensor wird die Videoüberwachung aktiviert und erst bei Unterschreitung des Grenzwertes deaktiviert. Auf der Videoaufzeichnung ist die Verkehrssituation mit allen Fahrzeugen erfasst und kann den jeweiligen Verformungen an der Messstelle zugeordnet werden. Eine eindeutige Identifikation von Fahrzeugen mit erhöhtem Gesamtgewicht ist möglich, wenn sich ein Fahrzeug allein im Lasteinflussbereich des Verformungssensors befindet. Der vorgegebene Verformungsgrenzwert kann aber auch durch eine Lastkombination von mehreren Fahrzeugen im Lasteinflussbereich überschritten werden, obwohl kein Fahrzeug das zulässige Gesamtgewicht überschreitet.

Die Festlegung des Verformungsgrenzwertes hat einen direkten Einfluss auf die Anzahl der Überwachungsvorgänge. Bei einer Festlegung des Grenzwertes unter Berücksichtigung der zulässigen Brückenbelastung kann davon ausgegangen werden, dass in bestimmten Verkehrssituationen, zum Beispiel wenn nur ein Fahrzeug auf der Brücke ist, auch ein Fahrzeug mit überhöhtem Gesamtgewicht noch keinen Überwachungsvorgang auslöst.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
- Fig. 1: eine erfindungsgemäße Vorrichtung im Längsschnitt;
- Fig. 2: einen potentiometrischen Wegaufnehmer in Ansicht;
- Fig. 3a: eine Darstellung des potentiometrischen Wegaufnehmers für vertikale Verformungen;
- Fig. 3b: eine Darstellung des potentiometrischen Wegaufnehmers für horizontale Verformungen.

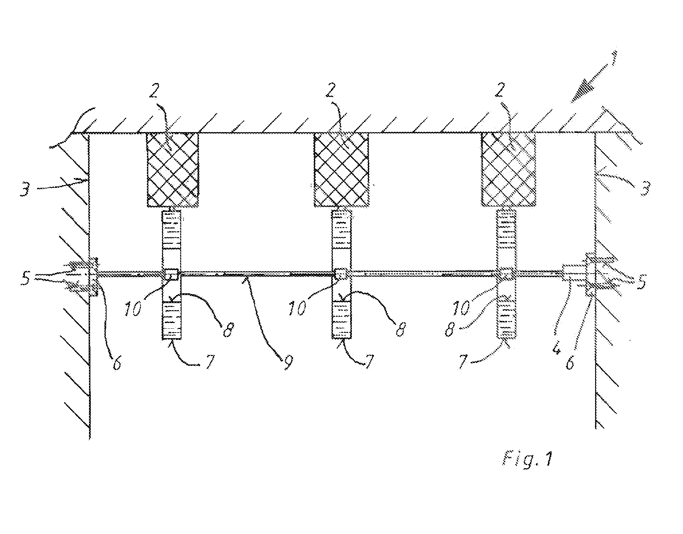

Fig. 1 zeigt eine Vorrichtung 1, die an setzungsempfindlichen Bauteilen 2, beispielsweise Dachsparren, angeordnet ist. Die Vorrichtung 1 weist ein Spannseil 9 auf, welches mittels Halteplatten 6 an setzungsunempfindlichen Bauteilen 3, beispielsweise gemauerten Wänden, mittels Schrauben 5 befestigt ist. An den setzungsempfindlichen Bauteilen 2 sind potentiometrische Wegaufnehmer 7 angeordnet. Durch eine Öffnung 8 der Wegaufnehmer 7 ist das Drahtseil 9 geführt, welches, wie schon ausgeführt, an den setzungsunempfindlichen Bauteilen 3 befestigt ist und eine gewisse Vorspannung aufweist.

Das Spannseil 9 ist über eine Spannvorrichtung 4 nachspannbar, derart, dass das Spannseil 9 eine vorgegebene Vorspannung aufweist.

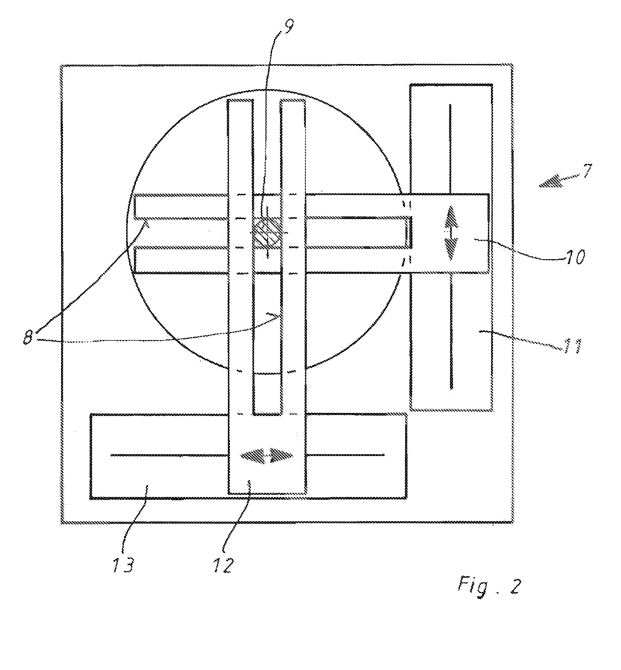

Fig. 2 zeigt den potentiometrischen Wegaufnehmer 7. Der Wegaufnehmer 7 arbeitet wie ein linearer veränderlicher Widerstand, das heißt, ein Schleifer 10 wird über eine Widerstandsbahn 11 geschoben. Wird eine Spannung am Wegaufnehmer 7 angelegt, so ist die Ausgangsspannung am Schleifer 10 proportional zur Position des Schleifers 10 auf der Widerstandsbahn 11. Der Schleifer 10 und die Widerstandsbahn 11 sind für die horizontale Verschiebung des Drahtes 9 vorgesehen. Für die vertikale Verschiebung ist ein Schleifer 12 auf einer Widerstandsbahn 13 vorgesehen.

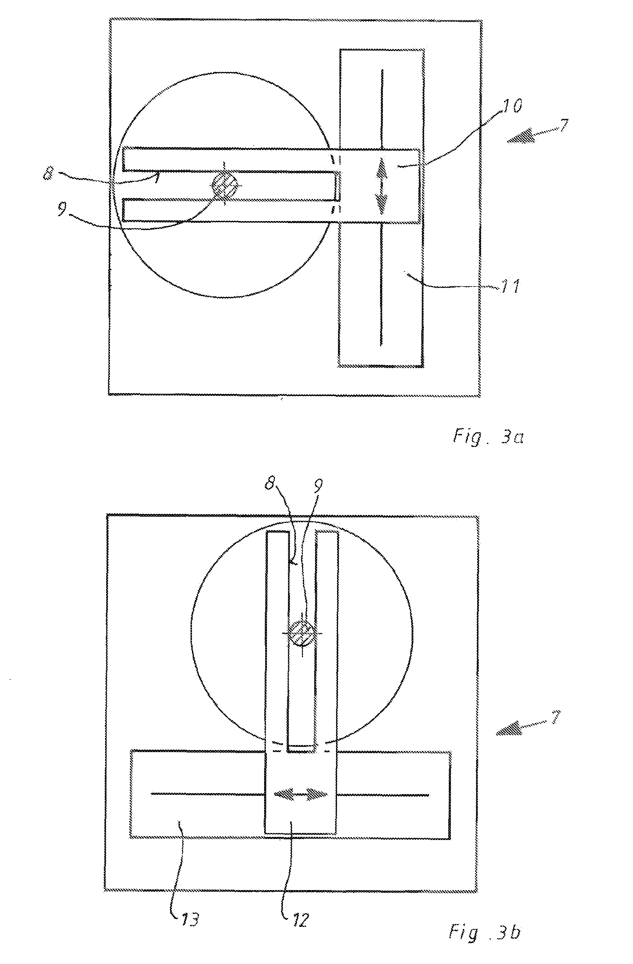

Fig. 3a stellt den Schleifer 10 für die horizontale Verschiebung des Drahtes 9 dar.

Fig. 3b stellt den Schleifer 12 für die vertikale Verschiebung des Drahtes 9 dar.

### Bezugszahlen

- 1: Vorrichtung
- 2: setzungsempfindliches Bauteil
- 3: setzungsunempfindliches Bauteil
- 4: Vorrichtung zum Nachspannen
- 5: Schrauben
- 6: Halteplatten
- 7: Wegaufnehmer
- 8: Öffnung
- 9: Drahtseil
- 10: Schleifer
- 11: Widerstandsbahn
- 12: Schleifer
- 13: Widerstandsbahn

## Patentansprüche

1. Vorrichtung zur Erfassung von Bewegungen von setzungsempfindlichen Bauteilen mit einem Spanndraht oder einem Spannseil, der oder das an einem setzungsunempfindlichen Bauteil angeordnet ist, und dass an dem zu überwachenden Bauteil ein Wegaufnehmer angeordnet ist,
**dadurch gekennzeichnet, dass** der Wegaufnehmer (7) als ein vertikale und/oder horizontale Bewegungen erfassender Wegaufnehmer (7) ausgebildet ist.

2. Vorrichtung nach Anspruch 1, **dadurch gekennzeichnet, dass** in dem Wegaufnehmer (7) ein oder zwei Schleifkontakte (10, 12) angeordnet sind, die mit dem Spannseil (9) oder dem Spanndraht verbunden sind.

3. Vorrichtung nach Anspruch 1 oder 2, **dadurch gekennzeichnet, dass** der Wegaufnehmer (7) als potentiometrischer Wegaufnehmer (7) ausgebildet ist.

4. Vorrichtung nach einem der vorhergehenden Ansprüche, **dadurch gekennzeichnet, dass** zusätzlich zu dem Wegaufnehmer (7) wenigstens eine Messvorrichtung für Klimadaten vorgesehen ist.

5. Vorrichtung nach einem der vorhergehenden Ansprüche, **dadurch gekennzeichnet, dass** die Daten des Wegaufnehmers (7) und/oder die Klimadaten abspeicherbar und/oder fernübertragbar sind.

6. Vorrichtung nach Anspruch 5, **dadurch gekennzeichnet, dass** eine Datenübertragung über Satellit vorgesehen ist.

7. Vorrichtung nach einem der vorhergehenden Ansprüche, **dadurch gekennzeichnet, dass** eine Fotovoltaik-Anlage für die Stromversorgung der Vorrichtung (1) vorgesehen ist.

8. Vorrichtung nach einem der vorhergehenden Ansprüche, **dadurch gekennzeichnet, dass** zusätzlich eine Vorrichtung zur Bestimmung des auf dem zu überwachenden Bauwerk (2) befindlichen Volumens vorgesehen ist.

9. Vorrichtung nach einem der vorhergehenden Ansprüche, **dadurch gekennzeichnet, dass** wenigstens eine Spannvorrichtung (4) für das Spannseil (9) oder den Spanndraht vorgesehen ist.

10. Vorrichtung nach einem der vorhergehenden Ansprüche, **dadurch gekennzeichnet, dass** eine Heizvorrichtung vorgesehen ist.
